# EUROPEAN PATENT APPLICATION

(11) **EP 4 113 036 A1**
(43) Date of publication of application: **04.01.2023**
(21) Application number: 20924244.5
(22) Date of filing: 21.12.2020
(51) Int. Cl.: F25B 40/00, F25B 39/00, F28D 7/10

(54) **THREE-WAY PIPE, HEAT EXCHANGER, HEAT EXCHANGER ASSEMBLY AND REFRIGERATION APPARATUS**

(30) Priority: 12.03.2020 CN 202022716847 U; 12.03.2020 CN 202020307365 U
(71) Applicant: Zhejiang Dunan Artificial Environment Co., Ltd., Shaoxing Zhejiang 311835 (CN)
(72) Inventor: CHENG, Dongsheng, Zhejiang 311835 (CN); ZHONG, Hui, Zhejiang 311835 (CN)
(74) Representative: Petraz, Gilberto Luigi
(86) International application number: PCT/CN2020/137892
(87) International publication number: WO 2021/179731

(57) **Abstract**

A three-way pipe, a heat exchanger (50), a heat exchanger assembly (100) and a refrigeration apparatus. The three-way pipe is used for connecting to a first pipe (51) and a second pipe (52) of the heat exchanger (50), and includes a first interface (531), a second interface (532) and a third interface (533), wherein inner cavities of the first interface (531), the second interface (532) and the third interface (533) are in communication with one another, and at least two of the first interface (531), the second interface (532) and the third interface (533) are different in pipe diameter.

## Description

### CROSS-REFERENCE TO RELATED APPLICATIONS

This application claims priority to Chinese patent applications No. 202020307365.X, filed on March 12, 2020, titled "HEAT EXCHANGER ASSEMBLY AND REFRIGERATION APPARATUS", and No. 202022716847.3, filed on March 12, 2020, titled "THREE-WAY PIPE AND HEAT EXCHANGER". The contents of the above identified applications are hereby incorporated herein in their entireties by reference.

### TECHNICAL FIELD

The present invention relates to the field of a refrigeration apparatus, and in particular, to a three-way pipe, a heat exchanger, a heat exchanger assembly and a refrigeration apparatus.

### BACKGROUND

During an operation of a refrigeration apparatus, a large amount of condensing heat would be emitted into the natural environment, and this condensing heat can be recycled. A conventional refrigeration apparatus can recycle a part of the condensing heat by a heat exchanger series or parallel therein, such as a shell and pipe type heat exchanger or a plate type heat exchanger. However, these heat exchangers are complex and large, and need to meet special requirements of size and shape thereof for installation.

At present, a double-pipe type heat exchanger can also be applied to the conventional refrigeration apparatus, and most of conventional double-pipe type heat exchangers are formed by multiple welding, which is not only difficult to process, but also easy to cause welding leaks, resulting in a risk of refrigerant leakage.

### SUMMARY

According to various embodiments of the present invention, a three-way pipe, a heat exchanger, a heat exchanger assembly and a refrigeration apparatus are provided.

The three-way pipe is configured to connect to a first pipe and a second pipe of the heat exchanger respectively, and includes a first interface, a second interface, and a third interface. Inner cavities of the first interface, the second interface, and the third interface are in communication with one another. At least two of the first interface, the second interface, and the third interface are different in pipe diameter, so that the first interface, the second interface, and the third interface are capable of connecting to the first pipe and the second pipe with different pipe diameters.

Furthermore, a central axis of the first interface coincides with a central axis of the second interface, and/or the central axis of the first interface is perpendicular to a central axis of the third interface.

Furthermore, an end of the first interface extending outwards is defined as a flared section which extends with an equal diameter.

Furthermore, an end of the second interface contracting along a radial direction is defined as a contracted section which extends with an equal diameter.

Furthermore, an end of the third interface extending outwards is defined as a diameter expanding section which extends with an equal diameter.

Furthermore, the first interface is connected to the first pipe and configured for allowing the second pipe sheathed in the first pipe to extend therein, the second interface is configured for allowing the second pipe extending through the first pipe to extend out, the third interface is connected to an extending section of the first pipe, and the first interface, the second interface, and the third interface are connected to the first pipe and the second pipe by welding.

Furthermore, the three-way pipe is integrally formed.

Embodiments of the present invention provides the three-way pipe. Interfaces with different pipe diameters are disposed to reduce or avoid using a metal bushing for connecting to the first pipe or the second pipe, enabling the three-way pipe to be adapted to the first pipe and/or the second pipe with different pipe diameters and to be directly connected to the first pipe and/or the second pipe, thereby reducing welding joints at a connection between the three-way pipe and the first pipe, or between the three-way pipe and the second pipe to reduce a risk of welding leaks. Thus, the heat exchanger with the above-mentioned three-way pipe is capable of reducing the risk of refrigerant leakage.

The present invention further provides a heat exchanger. The heat exchanger includes a first pipe, a second pipe, and any one of above-mentioned three-way pipes. The first pipe and the second pipe are correspondingly connected to the first interface, the second interface, and the third interface of the three-way pipe.

The present invention further provides a heat exchanger assembly. The heat exchanger assembly includes a condenser, a throttle element, an evaporator, and a compressor. The compressor, the condenser, and the evaporator are connected in turn and defined as a refrigeration cycle system, and the throttle element is disposed between the evaporator and the condenser. The heat exchanger assembly further includes the above heat exchanger. The first pipe and the second pipe are arranged in a nested manner, a pipe cavity of the second pipe is defined as a first heat exchange channel, a gap between the first pipe and the second pipe is defined as a second heat exchange channel, the first heat exchange channel is disposed between the condenser and the throttle element, and the second heat exchange channel is disposed between the compressor and the evaporator. The first pipe and the second pipe are fixedly connected to each other by at least two connectors with inner cavities, two ends of the first pipe are sheathed in and connected to corresponding connectors respectively, the second heat exchange channel is in communication with the inner cavities of the at least two connectors, two ends of the second pipe extend through corresponding connectors respectively, and the second pipe is an integrated pipe section.

Furthermore, parts of the second pipe being bent are defined into a plurality of bent portions, and a shape of the first pipe is arranged accordingly to that of the second pipe.

Furthermore, the heat exchanger further comprises an extending section, the at least two connectors include the three-way pipe, the three-way pipe includes the first interface, the second interface, and the third interface, the first interface is sheathed on and connected to an end of the first pipe, the second pipe located in the first pipe extends into the first interface and extends out from the second interface, and the third interface is configured to be connected to the extending section.

Furthermore, a wall of the second interface contracting along a radial direction is defined as a contracted section which is connected to the second pipe in a sealing manner.

Furthermore, a wall of the first interface extending outwards is defined as a flared section, and the flared section is sheathed on an end of the first pipe and connected to the first pipe in a sealing manner.

Furthermore, the first pipe is covered with a thermal insulation sleeve, and the thermal insulation sleeve extends to joints between two ends of the first pipe and the at least two connectors.

Furthermore, the first pipe is coaxial with the second pipe.

Furthermore, the compressor includes an output end connected to the condenser, and the evaporator includes an inlet end connected to the throttle element. The heat exchanger assembly further includes a connecting channel, one end of which is connected to the output end of the compressor and another end of which is connected to the inlet end of the evaporator.

The present invention further provides the heat exchanger assembly. A shape of the second pipe of the heat exchanger assembly can be adjusted according to a shape and a size of an installation space. An integrated second pipe is disposed to enable the heat exchanger to be with fewer welding joints and easy to produce and process, and to lower a requirement for the installation space of the heat exchanger.

The present invention further provides a refrigeration apparatus. The refrigeration apparatus includes any one of above-mentioned heat exchanger assemblies.

### BRIEF DESCRIPTION OF THE DRAWINGS

In order to better describe and explain the embodiments and/or examples of those inventions disclosed herein, one or more drawings may be referred to. The additional details or examples used to describe the drawings should not be considered as limiting the scope of any of the disclosed inventions, the currently described embodiments and/or examples, and the best mode of these inventions currently understood.
FIG. 1 is a schematic diagram of a principle of cooling of a heat exchanger assembly in an embodiment of the present invention.
FIG. 2 is a schematic diagram of a heat exchanger in the heat exchanger assembly shown in FIG. 1.
FIG. 3 is a three-dimensional schematic diagram of a connector in the heat exchanger shown in FIG. 2.
FIG. 4 is a cross-sectional schematic diagram of the connector shown in FIG. 3.

Description of reference numerals of main elements are as follows. 100 represents a heat exchanger assembly; 10 represents a compressor; 20 represents a condenser; 30 represents an evaporator; 40 represents a throttle element; 50 represents a heat exchanger; 51 represents a first pipe; 511 represents a thermal insulation sleeve; 52 represents a second pipe; 521 represents a first heat exchange channel; 522 represents a second heat exchange channel; 523 represents a bent portion; 53 represents a connector; 531 represents a first interface; 5311 represents a flared section; 5312 represents a first transitional section; 532 represents a second interface; 5321 represents a contracted section; 5322 represents a second transitional section; 533 represents a third interface; 5331 represents a diameter expanding section; 5332 represents a third transitional section; 54 represents an extending section; 60 represents a connecting channel.

### DETAILED DESCRIPTION

In order to make the purpose, technical solutions and advantages of the present invention clearer and more understood, the present invention is described in further detail hereinafter with reference to the accompanying drawings and specific embodiments. The specific embodiments described herein are only intended to explain the present invention and do not limit the scope of protection of the present invention.

It should be noted that when a component is considered to be "arranged" on another component, it may be directly arranged on the other component or an intervening component may be presented. When a component is considered to be "disposed" on another component, it may be directly disposed on the other component or an intervening component may be presented at the same time. When a component is considered to be "fixed" to another component, it may be directly fixed to the other component or an intervening component may be presented at the same time. The terms "vertical", "horizontal", "left", "right" and similar expressions used herein are only for illustrative purposes and are not meant to be the only embodiment.

Unless otherwise defined, all technical and scientific terms used herein have the same meaning as commonly understood by one skilled in the art to which the present invention pertains. The terminology used in the description of the present invention is only for the purpose of describing particular embodiments and is not intended to limit the invention. As used herein, the term "or/and" includes any and all combinations of one or more associated listed items.

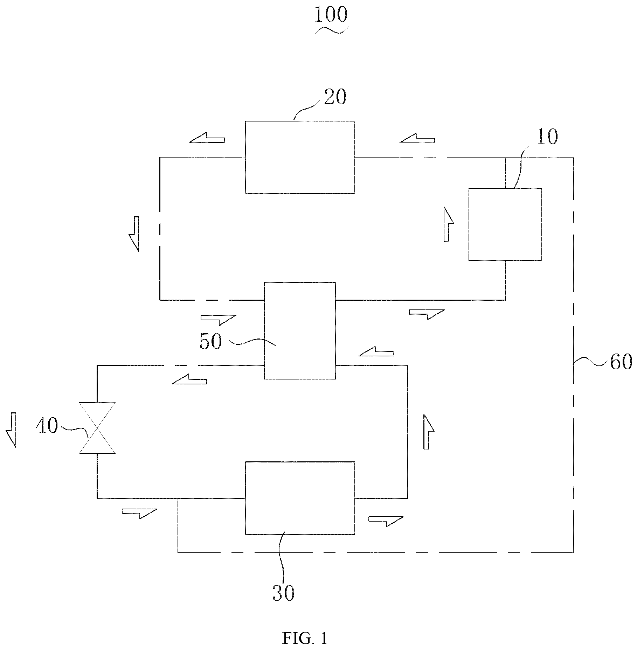

Referring to FIG. 1, FIG. 1 is a schematic diagram of a principle of cooling of a heat exchanger assembly 100 in an embodiment of the present invention.

The present invention provides a heat exchanger assembly 100. The heat exchanger assembly 100 in a refrigeration apparatus is configured to recycle condensing heat emitted from the environment. The heat exchanger assembly 100 can be applied to refrigeration apparatuses such as an ice machine or a refrigerator.

The heat exchanger assembly 100 can include a compressor 10, a condenser 20, an evaporator 30, and a throttle element 40. A conventional heat exchanger assembly 100 only includes the compressor 10, the condenser 20, the evaporator 30, and the throttle element 40. An output end of the compressor 10 is connected to an inlet of the condenser 20, an outlet of the condenser 20 is connected to an inlet of the evaporator 30, and an outlet of the evaporator 30 is connected to an input end of the compressor 10, thus a complete refrigeration cycle circuit for a refrigerant flowing is defined. The throttling element 40 is disposed between the condenser 20 and the evaporator 30, and configured to throttle the refrigerant flowing and reduce pressure. The refrigerant in the refrigeration cycle circuit is an intermediate medium configured to circulate and change an ambient temperature.

The compressor 10 is configured to compress a gaseous refrigerant in a low pressure into a gaseous refrigerant in a high pressure, the condenser 20 is configured to condense the gaseous refrigerant in the high pressure into a liquid refrigerant in the high pressure, the throttle element 40 is configured to throttle the refrigerant flowing and reduce pressure to change the liquid refrigerant in the high pressure into a gas-liquid refrigerant or a liquid refrigerant in the low pressure, and the evaporator 30 is configured to evaporate the gas-liquid refrigerant or the liquid refrigerant in the low pressure into a gaseous refrigerant. A process of heat absorbing and an evaporating of the refrigerant in the evaporator 30 is a main refrigeration process in the refrigeration apparatus.

During an operation process of the refrigeration apparatus, a large amount of condensing heat from the condenser 20 would be emitted into the natural environment around the refrigeration apparatus, resulting in heating of the apparatus and overheating of an operation environment.

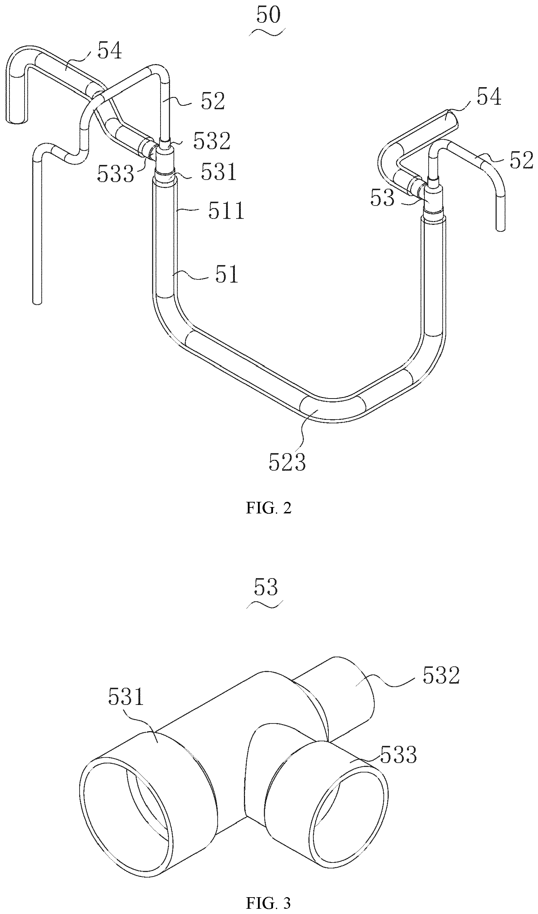

Referring to FIG. 2, FIG. 2 is a schematic diagram of a heat exchanger 50 in the heat exchanger assembly 100 shown in FIG. 1.

To further recycle condensing heat, the heat exchanger assembly 100 can be provided with a shell and pipe type heat exchanger 50, which can be provided with two heat exchange channels. One heat exchange channel can be disposed between the condenser 20 and the throttle element 40 and connected to the condenser 20 and the throttle element 40, and the other heat exchange channel can be disposed between the evaporator 30 and the compressor 10 and connected to the evaporator 30 and the compressor 10. In this way, not only can the condensing heat originally emitted to the environment be recycled, but also a refrigeration effect of the heat exchanger assembly 100 can be further enhanced.

The heat exchanger 50 is substantially in a pipe shape, including a first pipe 51, a second pipe 52 and multiple connectors 53 with inner cavities. The first pipe 51 can be sheathed on the second pipe 52, and two ends of the first pipe 51 can be connected to corresponding connectors 53 respectively. Two ends of the second pipe 52 can extend out from the first pipe 51 respectively, and extending parts of the second pipe 52 are fixed to the corresponding connectors 53 respectively. A pipe cavity of the second pipe 52 is defined as a first heat exchange channel 521, and a gap between the first pipe 51 and the second pipe 52 is defined as a second heat exchange channel 522. When the heat exchanger 50 is not connected to other member, the first heat exchange channel 521 is not in communication with the second heat exchange channel 522. The first pipe 51 is configured to be connected to the connectors 53 to define the second heat exchange channel 522 with the second pipe 52, the second pipe 52 is configured to define the first heat exchange channel 521, the connectors 53 are configured to be connected to the first pipe 51 and the second pipe 52, and further provide an interface for the first pipe 51 to be connected to other member.

The first pipe 51 of the heat exchanger 50 can be substantially in a structure of a single pipe. An inner diameter of the first pipe 51 can be greater than an outer diameter of the second pipe 52. The two ends of the first pipe 51 can be connected to two corresponding connectors 53 respectively.

In other embodiments, the first pipe 51 can be in a shape of a non-circular pipe, such as a polygonal prism, as long as the first pipe 51 can accommodate the second pipe 52 and be connected to the connectors 53.

In an embodiment, the first pipe 51 can be covered with a thermal insulation sleeve 511, and the thermal insulation sleeve 511 can extend to joints between the two ends of the first pipe 51 and the connectors 53. The thermal insulation sleeve 511 can be made of a material with good insulation properties such as asbestos or a polyurethane foam material. In this way, the heat in the heat exchanger assembly 100 is not easy to emit to the environment, and can be fully recycled.

At present, a double-pipe type heat exchanger 50 can be applied to the refrigeration apparatus. A conventional double-pipe type heat exchanger 50 can be made by multiple welding, which is not only difficult to process, but also easy to cause welding leaks, resulting in a risk of refrigerant leakage. To simplify a production and processing process of the heat exchanger 50 and lower a requirement for an installation space of the heat exchanger 50, the second pipe 52 of the heat exchanger 50 can be an integrated pipe section, enabling the heat exchanger 50 to be with fewer welding joints and easy to produce and process, and to better adapt to a small installation space in the refrigeration apparatus.

As shown in FIG. 2, the second pipe 52 is substantially in a pipe shape, and the pipe cavity of the second pipe 52 is defined as the first heat exchange channel 521. The second pipe 52 is accommodated in a pipe cavity of the first pipe 51, and the second heat exchange channel 522 is defined between the second pipe 52 and an inner wall of the first pipe 51. The second pipe 52 can extend through the connectors 53 and be connected to other member of the refrigeration apparatus, and the second pipe 52 is fixed to the connectors 53 in a sealing manner.

In an embodiment, the first pipe 51 or the second pipe 52 is made of a whole metal pipe without welding. In this way, the first pipe 51 or the second pipe 52 has fewer welding joints and is easy to produce and mold, and a pipe component consisting of the first pipe 51 and the second pipe 52 can be bent and defined into different shapes accordingly to fit different installation spaces.

Furthermore, the metal pipe can be a copper pipe, an aluminum pipe with good thermal conductivity, or other alloy metal pipe that meets a thermal conductivity requirement. In this way, a heat exchange efficiency between the first pipe 51 and the second pipe 52 can be improved.

Furthermore, parts of the second pipe 52 being bent are defined into a plurality of bent portions 523, and a shape of the first pipe 51 can be bent accordingly to that of the second pipe 52. In this way, the heat exchanger 50 can adapt to different installation spaces, such as narrow or irregular installation spaces.

Furthermore, the second pipe 52 can be coaxial with the first pipe 51 to facilitate a formation of the second heat exchange channel 522 with uniform size distribution and to facilitate a heat transfer between the first heat exchange channel 521 and the second heat exchange channel 522.

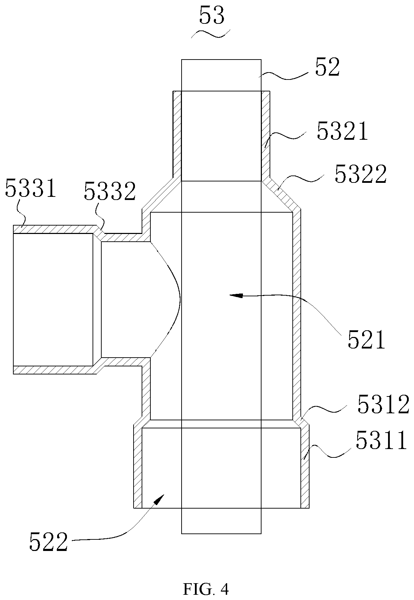

Referring to FIG. 3 and FIG. 4, FIG. 3 is a three-dimensional schematic diagram of a connector 53 in the heat exchanger 50 shown in FIG. 2, and FIG. 4 is a cross-sectional schematic diagram of the connector 53 shown in FIG. 3.

In an embodiment, the connector 53 can include two three-way pipes which are connected to two ends of the first pipe 51 respectively.

The three-way pipe can include a first interface 531, a second interface 532, and a third interface 533. The first interface 531 can be connected to an end of the first pipe 51 and configured for allowing an end of the second pipe 52 extending through the first pipe 51 to extend into the three-way pipe. The second interface 532 can be fixed to an end of the second pipe 52 extending out from the three-way pipe. The third interface 533 can be connected to an extending section 54 of the first pipe 51.

A conventional three-way pipe can usually be adapted to the first pipe 51 and the second pipe 52 with different pipe diameters by metal bushings with different sizes. A connection between the above-mentioned conventional three-way pipe and a heat exchanger pipe is usually subject to multiple welding and is prone to a risk of welding leaks.

To solve the above problem, at least two of the first interface 531, the second interface 532, and the third interface 533 can be different in pipe diameter, so that the first interface 531, the second interface 532, and the third interface 533 are capable of connecting to the first pipe 51 and the second pipe 52 with different pipe diameters. Interfaces with different pipe diameters are disposed in the three-way pipe to reduce or avoid using the metal bushings for connecting to the first pipe 51 or the second pipe 52, enabling the three-way pipe to be adapted to the first pipe 51 and/or the second pipe 52 with different pipe diameters and to be directly connected to the first pipe 51 and/or the second pipe 52, thereby reducing welding joints at a connection between the three-way pipe and the first pipe 51, or between the three-way pipe and the second pipe 52 to reduce the risk of welding leaks. Thus, the heat exchanger 50 with the above-mentioned three-way pipe is capable of reducing the risk of refrigerant leakage.

The pipe diameters of the first interface 531, the second interface 532, and the third interface 533 can be either an outer diameter or an inner diameter of corresponding interface. When the first pipe 51 is sheathed in and connected to any one of the above interfaces, the pipe diameter refers to the out diameter of any one of the above interfaces. When the first pipe 51 extends into any one of the above interfaces, the pipe diameter refers to the inner diameter of any one of the above interfaces. As long as the pipe diameters of the first interface 531, the second interface 532, and the third interface 533 can be adapted to the first pipe 51 or the second pipe 52 to be connected. In the present embodiment, the pipe diameters of the first interface 531, the second interface 532, and the third interface 533 can be inner diameters thereof.

Specifically, the pipe diameter of the first interface 531 is greater than that of the third interface 533. Since the first interface 531 is connected to the first pipe 51, the third interface 533 is connected to the extending section 54 of the first pipe 51, and a pipe diameter of the first pipe 51 is greater than that of the extending section 54 of the first pipe 51, the pipe diameter of the first interface 531 configured for being connected to the first pipe 51 is greater than that of the third interface 533 configured for being connected to the extending section 54 of the first pipe 51. The extending section 54 of the first pipe 51 does not need to be sheathed on the second pipe 52, so the pipe diameter of the extending section 54 of the first pipe 51 can be reduced to save material and the pipe diameter of the third interface 533 can be reduced, resulting in decreasing a welding area between the third interface 533 and the extending section 54 of the first pipe 51 and lowering a welding difficulty.

In other embodiments, the pipe diameter of the first interface 531 can be less than or equal to that of the third interface 533, as long as the first interface 531 can be connected to the first pipe 51 and the third interface 533 can be connected to the extending section 54 of the first pipe 51.

Specifically, the pipe diameter of the first interface 531 is greater than that of the second interface 532. The first interface 531 is connected to the first pipe 51, the second interface 532 is sheathed on and connected to an outer periphery of the second pipe 52, and the pipe diameter of the first pipe 51 is greater than that of the second pipe 52, so the pipe diameter of the first interface 531 configured for being connected to the first pipe 51 is greater than that of the second interface 532 configured for being connected to the second pipe 52. In this way, the first pipe 51 and the second pipe 52 can be directly connected to the first interface 531 and the second interface 532 respectively, reducing welding joints at a connection between the three-way pipe and the first pipe 51, or between the three-way pipe and the second pipe 52 to reduce the risk of welding leaks.

In an embodiment, the pipe diameter of the third interface 533 is greater than that of the second interface 532. Since the second interface 532 is sheathed on and connected to the second pipe 52, the third interface 533 is connected to the extending section 54 of the first pipe 51, and the pipe diameter of the second pipe 52 is less than that of the extending section 54 of the first pipe 51, the pipe diameter of the second interface 532 configured for being connected to the second pipe 52 is less than that of the third interface 533 configured for being connected to the extending section 54 of the first pipe 51. In this way, the second interface 532 and the third interface 533 can be adapted to pipes with different pipe diameters, thus increasing a range of application of the three-way pipe.

A central axis of the first interface 531 can coincide with a central axis of the second interface 532, and a central axis of the third interface 533 can be perpendicular to the central axis of the first interface 531, resulting that the three-way pipe is substantially in a shape of "T". The first interface 531 is configured to be fixedly connected to the first pipe 51 and allow the second pipe 52 to extend into the three-way pipe, the second interface 532 is configured to be fixed to the second pipe 52 and allow the second pipe 52 to extend out from the three-way pipe, and the third interface 533 is configured for being connected to the extending section 54 of the first pipe 51. The three-way pipe can be connected to other members of the refrigeration apparatus by the extending section 54 of the first pipe 51.

In an embodiment, to facilitate a connection between the first pipe 51 and the first interface 531, the first interface 531 is provided with a flared section 5311 extending outwards, and the flared section 5311 can extend with an equal diameter. An inner diameter of the flared section 5311 is greater than or equal to an outer diameter of the first pipe 51. The flared section 5311 is configured to be sheathed on an end of the first pipe 51, and to be connected to the first pipe 51 in a sealing manner. The flared section 5311 can be connected to the first pipe 51 in the sealing manner by welding. In this way, only the three-way pipe with less length needs to be processed, and further processing of the end of the first pipe 51 with longer length can be avoided, which can facilitate an operation of processing members and simplify a processing of the heat exchanger 50.

In other embodiments, when an ease of the processing is not considered, the flared section 5311 can also be disposed on the first pipe 51.

Furthermore, a first transitional section 5312 can be disposed between the first interface 531 and the flared section 5311. An inner diameter of the first transitional section 5312 can gradually shrink from an end of the first interface 531 to the flared section 5311. In this way, the first transitional section 5312 is easy to process and mold, and a transition between the first interface 531 and the flared section 5311 can be smooth.

In an embodiment, a diameter expanding section 5331 can also be disposed on the third interface 533 and configured to be connected to the extending section 54 of the first pipe 51. In the present embodiment, the diameter expanding section 5331 is configured to be sheathed on and connected to the extending section 54 of the first pipe 51. A specific dimension of the diameter expanding section 5331 is adapted to that of the extending section 54 of the first pipe 51. In this way, the third interface 533 can be adapted to the extending sections 54 of the first pipe 51 in different pipe diameters. A third transitional section 5332 can also be disposed between the third interface 533 and the diameter expanding section 5331, and a structure and a function of the third transitional section 5332 are similar to those of the first transitional section 5312, which would not be described herein.

In an embodiment, to facilitate a connection and a fixation with the second pipe 52, a wall of the second interface 532 contracting along a radial direction is defined as a contracted section 5321. The contracted section 5321 can be connected to the second pipe 52 in a sealing manner. The contracted section 5321 can be in a pipe section structure with an equal diameter, and the contracted section 5321 is tightly attached to an outer surface of the second pipe 52 and fixed to the second pipe 52 by welding. After the second interface 532 is fixed to the second pipe 52 by the contracted section 5321, the second heat exchange channel 522 can be sealed at the second interface 532, and the refrigerant can flow out from the three-way pipe through the third interface 533. In this way, the second interface 532 and the second pipe 52 can be closely fitted and sealed, a connection strength thereof is better, and it is not easy to leak the refrigerant.

Furthermore, a second transitional section 5322 can be disposed between the second interface 532 and the contracted section 5321. An inner diameter of the second transitional section 5322 can gradually shrink from an end of the second interface 532 to the contracted section 5321. In this way, the second transitional section 5322 is easy to process and mold, and a transition between the second interface 531 and the contracted section 5321 can be smooth.

The first interface 531, the second interface 532, and the third interface 533 are connected to the first pipe 51 and the second pipe 52 by welding. Specifically, the first interface 531 can be connected to the first pipe 51 through the flared section 5311 by welding, the second interface 532 can be connected to the second pipe 52 through the flared section 5311 by welding, and the third interface 533 can be connected to the first pipe 51 through the diameter expanding section 5331 by welding. In this way, dimensions of the flared section 5311, the contracted section 5321, and the diameter expanding section 5331 can be controlled to enable multiple interfaces of the three-way pipe to be adapted to pipe members respectively, and to decrease the number of the welding, resulting in reducing the risk of refrigerant leakage.

In an embodiment, the three-way pipe can be integrally formed. In this way, the three-way pipe is easy to process, and structural strength thereof is better, resulting in enabling the heat exchanger 50 connected to the first pipe 51 and the second pipe 52 to have a solid connection.

In an embodiment, the heat exchanger assembly 100 is further provided with a connecting channel 60 for rapid defrosting, two ends of the connecting channel are in communication with an output end of the compressor 10 and an inlet end of the evaporator 30. In this way, by controlling opening and closing of the connection channel 60, heat of the refrigerant at the output end of the compressor 10 and heat of the refrigerant at the inlet end of the evaporator 30 can be transferred to each other, so that freezing or frost in the refrigeration apparatus can be melted quickly.

The following specifies an operating process of the heat exchanger assembly 100. During a refrigeration process, the refrigerant flows in directions of arrows. The second pipe 52 can be connected between the condenser 20 and the throttle element 40, and the liquid refrigerant in the high pressure flowed out from the condenser 20 can enter the throttle element 40 through the first heat exchange channel 521. The evaporator 30 is connected to an extending section 54 located at an end of the first pipe 51, and the compressor 10 is connected to another extending section 54 located at another end of the first pipe 51. The evaporator 30 and the compressor 10 are connected to the second heat exchange channel 522 through the extending sections 54 of the first pipe 51 and the three-way pipe. The gaseous refrigerant in the low pressure flowed out from the evaporator 30 can flow into the second heat exchange channel 522. The refrigerant can exchange heat between the first heat exchange channel 521 and the second heat exchange channel 522. After the refrigerant flows out from the first heat exchange channel 521, the refrigerant continues to flow to the throttle element 40. After the refrigerant flows out from the second heat exchange channel 521, the refrigerant continues to flow to the compressor 10. In this way, the condensing heat originally emitted to the environment can be reused to further enhance a cooling effect. At the same time, the heat exchanger 50 can play an auxiliary cooling role in the heat exchanger assembly 100.

In other embodiments, a connection position of the first heat exchange channel 521 and the second heat exchange channel 522 can be interchanged, as long as a purpose of heat exchange between thereof can be achieved.

The present invention further provided a refrigeration apparatus (not shown), which can include the heat exchanger assembly 100 described above.

The present invention further provided a heat exchanger assembly. A shape of the second pipe of the heat exchanger assembly can be adjusted according to a shape and a size of an installation space. An integrated second pipe is disposed to enable the heat exchanger to be with fewer welding joints and easy to produce and process, and to lower a requirement for the installation space of the heat exchanger.

The technical features of the above-described embodiments may be combined in any combination. For the sake of brevity of description, not all possible combinations of the technical features in the above embodiments are described. However, as long as there is no contradiction between the combinations of these technical features, all should be considered as within the scope of this invention.

Those of ordinary skilled in the art should recognize that, the above-described embodiments are merely illustrative of the present invention, but is not to be construed as limiting the scope of the invention. A number of variations and modifications may be made without departing from the spirit all fall within the scope of this invention.

One of ordinary skill in the art should recognize that the above embodiments are used to illustrate the present invention only, and are not as limitations to the present invention. Appropriate changes and variations made to the above embodiments all fall within the scope of protection claimed in the present invention as long as they are within the essential spirit of the present invention.

## Claims

1. A three-way pipe, configured to connect to a first pipe and a second pipe of a heat exchanger respectively, comprising a first interface, a second interface, and a third interface, inner cavities of the first interface, the second interface, and the third interface being in communication with one another, **characterized in that**
at least two of the first interface, the second interface, and the third interface are different in pipe diameter, so that the first interface, the second interface, and the third interface are capable of connecting to the first pipe and the second pipe with different pipe diameters.

2. The three-way pipe of claim 1, **characterized in that** a central axis of the first interface coincides with a central axis of the second interface; and/or
the central axis of the first interface is perpendicular to a central axis of the third interface.

3. The three-way pipe of claim 1, **characterized in that** an end of the first interface extending outwards is defined as a flared section which extends with an equal diameter.

4. The three-way pipe of claim 1, **characterized in that** an end of the second interface contracting along a radial direction is defined as a contracted section which extends with an equal diameter.

5. The three-way pipe of claim 1, **characterized in that** an end of the third interface extending outwards is defined as a diameter expanding section which extends with an equal diameter.

6. The three-way pipe of claim 1, **characterized in that** the first interface is connected to the first pipe and configured for allowing the second pipe sheathed in the first pipe to extend therein, the second interface is configured for allowing the second pipe extending through the first pipe to extend out, the third interface is connected to an extending section of the first pipe, and the first interface, the second interface, and the third interface are connected to the first pipe and the second pipe by welding.

7. The three-way pipe of claim 1, **characterized in that** the three-way pipe is integrally formed.

8. A heat exchanger, **characterized in that** comprising a first pipe, a second pipe, and the three-way pipe of any one of claims 1 to 7, the first pipe and the second pipe are correspondingly connected to the first interface, the second interface, and the third interface of the three-way pipe.

9. A heat exchanger assembly, comprising a condenser, a throttle element, an evaporator, and a compressor, the compressor, the condenser, and the evaporator being connected in turn and defined as a refrigeration cycle system, and the throttle element being disposed between the evaporator and the condenser, **characterized in that**
the heat exchanger assembly further comprises the heat exchanger of claim 8, the first pipe and the second pipe are arranged in a nested manner, a pipe cavity of the second pipe is defined as a first heat exchange channel, a gap between the first pipe and the second pipe is defined as a second heat exchange channel, the first heat exchange channel is disposed between the condenser and the throttle element, and the second heat exchange channel is disposed between the compressor and the evaporator;
the first pipe and the second pipe are fixedly connected to each other by at least two connectors with inner cavities, two ends of the first pipe are sheathed in and connected to corresponding connectors respectively, the second heat exchange channel is in communication with the inner cavities of the at least two connectors, two ends of the second pipe extend through corresponding connectors respectively, and the second pipe is an integrated pipe section.

10. The heat exchanger assembly of claim 9, **characterized in that** parts of the second pipe being bent are defined into a plurality of bent portions, and a shape of the first pipe is arranged accordingly to that of the second pipe.

11. The heat exchanger assembly of claim 9, **characterized in that** further comprising an extending section, the at least two connectors comprise the three-way pipe, the three-way pipe comprises the first interface, the second interface, and the third interface, the first interface is sheathed on and connected to an end of the first pipe, the second pipe located in the first pipe extends into the first interface and extends out from the second interface, and the third interface is configured to be connected to the extending section.

12. The heat exchanger assembly of claim 11, **characterized in that** a wall of the second interface contracting along a radial direction is defined as a contracted section which is connected to the second pipe in a sealing manner.

13. The heat exchanger assembly of claim 11, **characterized in that** a wall of the first interface extending outwards is defined as a flared section, and the flared section is sheathed on an end of the first pipe and connected to the first pipe in a sealing manner.

14. The heat exchanger assembly of claim 9, **characterized in that** the first pipe is covered with a thermal insulation sleeve, and the thermal insulation sleeve extends to joints between the two ends of the first pipe and the at least two connectors.

15. The heat exchanger assembly of claim 9, **characterized in that** the first pipe is coaxial with the second pipe.

16. The heat exchanger assembly of claim 9, **characterized in that** the compressor comprises an output end connected to the condenser, the evaporator comprises an inlet end connected to the throttle element;
the heat exchanger assembly further comprises a connecting channel, one end of which is connected to the output end of the compressor and another end of which is connected to the inlet end of the evaporator.

17. A refrigeration apparatus, comprising the heat exchanger assembly of any one of claims 9 to 16.

## Amended claims

### Amended claims under Art. 19.1 PCT

1. A three-way pipe, configured to connect to a first pipe and a second pipe of a heat exchanger respectively, comprising a first interface, a second interface, and a third interface, inner cavities of the first interface, the second interface, and the third interface being in communication with one another, **characterized in that**
at least two of the first interface, the second interface, and the third interface are different in pipe diameter, so that the first interface, the second interface, and the third interface are capable of connecting to the first pipe and the second pipe with different pipe diameters.

2. The three-way pipe of claim 1, **characterized in that** a central axis of the first interface coincides with a central axis of the second interface; and/or
the central axis of the first interface is perpendicular to a central axis of the third interface.

3. The three-way pipe of claim 1, **characterized in that** an end of the first interface extending outwards is defined as a flared section which extends with an equal diameter.

4. The three-way pipe of claim 1, **characterized in that** an end of the second interface contracting along a radial direction is defined as a contracted section which extends with an equal diameter.

5. The three-way pipe of claim 1, **characterized in that** an end of the third interface extending outwards is defined as a diameter expanding section which extends with an equal diameter.

6. The three-way pipe of claim 1, **characterized in that** the first interface is connected to the first pipe and configured for allowing the second pipe sheathed in the first pipe to extend therein, the second interface is configured for allowing the second pipe extending through the first pipe to extend out, the third interface is connected to an extending section of the first pipe, and the first interface, the second interface, and the third interface are connected to the first pipe and the second pipe by welding.

7. The three-way pipe of claim 1, **characterized in that** the three-way pipe is integrally formed.

8. A heat exchanger, **characterized in that** comprising a first pipe, a second pipe, and the three-way pipe of any one of claims 1 to 7, the first pipe and the second pipe are correspondingly connected to the first interface, the second interface, and the third interface of the three-way pipe.

9. A heat exchanger assembly, comprising a condenser, a throttle element, an evaporator, and a compressor, the compressor, the condenser, and the evaporator being connected in turn and defined as a refrigeration cycle system, and the throttle element being disposed between the evaporator and the condenser, **characterized in that**
the heat exchanger assembly further comprises the heat exchanger of claim 78, the first pipe and the second pipe are arranged in a nested manner, a pipe cavity of the second pipe is defined as a first heat exchange channel, a gap between the first pipe and the second pipe is defined as a second heat exchange channel, the first heat exchange channel is disposed between the condenser and the throttle element, and the second heat exchange channel is disposed between the compressor and the evaporator;
the first pipe and the second pipe are fixedly connected to each other by at least two connectors with inner cavities, two ends of the first pipe are sheathed in and connected to corresponding connectors respectively, the second heat exchange channel is in communication with the inner cavities of the at least two connectors, two ends of the second pipe extend through corresponding connectors respectively, and the second pipe is an integrated pipe section.

10. The heat exchanger assembly of claim 9, **characterized in that** parts of the second pipe being bent are defined into a plurality of bent portions, and a shape of the first pipe is arranged accordingly to that of the second pipe.

11. The heat exchanger assembly of claim 9, **characterized in that** further comprising an extending section, the at least two connectors comprise the three-way pipe, the three-way pipe comprises the first interface, the second interface, and the third interface, the first interface is sheathed on and connected to an end of the first pipe, the second pipe located in the first pipe extends into the first interface and extends out from the second interface, and the third interface is configured to be connected to the extending section.

12. The heat exchanger assembly of claim 11, **characterized in that** a wall of the second interface contracting along a radial direction is defined as a contracted section which is connected to the second pipe in a sealing manner.

13. The heat exchanger assembly of claim 11, **characterized in that** a wall of the first interface extending outwards is defined as a flared section, and the flared section is sheathed on an end of the first pipe and connected to the first pipe in a sealing manner.

14. The heat exchanger assembly of claim 9, **characterized in that** the first pipe is covered with a thermal insulation sleeve, and the thermal insulation sleeve extends to joints between the two ends of the first pipe and the at least two connectors.

15. The heat exchanger assembly of claim 9, **characterized in that** the first pipe is coaxial with the second pipe.

16. The heat exchanger assembly of claim 9, **characterized in that** the compressor comprises an output end connected to the condenser, the evaporator comprises an inlet end connected to the throttle element;
the heat exchanger assembly further comprises a connecting channel, one end of which is connected to the output end of the compressor and another end of which is connected to the inlet end of the evaporator.

17. A refrigeration apparatus, comprising the heat exchanger assembly of any one of claims 9 to 16.
